# EUROPEAN PATENT APPLICATION

(11) **EP 4 350 641 A1**
(43) Date of publication of application: **10.04.2024**
(21) Application number: 22199642.4
(22) Date of filing: 04.10.2022
(51) Int. Cl.: G06V 20/56, B60W 60/00, G01S 17/931, G08G 1/16

(54) **AUTOMATIC TRAFFIC-AWARE SEMANTIC ANNOTATION OF DYNAMIC OBJECTS**

(71) Applicant: aiMotive Kft., 1025 Budapest (HU)
(72) Inventor: RUDAN, János, 2092 Budakeszi (HU); SZABÓ, Oszkár Albert, 1114 Budapest (HU)
(74) Representative: Hofmann, Matthias

(57) **Abstract**

A Computer-implemented method for annotating sensor data recorded at multiple timepoints from a surrounding of a vehicle, the method comprising:
- determining an object in the sensor data;
- determining an object area covered by the object at a current timepoint and determining a future vehicle trajectory of the vehicle; and
- annotating the object as relevant if the object area is determined to interfere with the future vehicle trajectory.

## Description

### TECHNICAL FIELD

The present invention relates to a Computer-implemented method for annotating sensor data recorded at multiple timepoints from a surrounding of a vehicle and a sensor data annotation device.

The present invention also relates to a computer-readable storage medium storing program code, the program code comprising instructions for carrying out such a method.

### BACKGROUND

In the context of automated and autonomous driving, traffic safety in the sense of avoiding collisions with other objects (e.g. vehicles or vulnerable road users) is crucial. Traffic situations in urban settings are highly complex and involve a high number of traffic participants that need to be considered by the automated vehicle. Hence, sufficiently large training data sets are of central importance for machine learning algorithms concerning automated and autonomous driving.

In the prior art, various annotation methods for building training data sets for supervised learning for autonomous driving are known. However, existing methods (which involve e.g. the manual labelling of acquired sensor data) are too time-consuming and sufficient to provide the large amount of (labelled) training data that are required for training modern algorithms.

There is a need for improved methods not only for acquiring training data, but also for labelling previously acquired training data.

### SUMMARY OF THE INVENTION

The objective of the present invention is to provide a computer-implemented method for annotating sensor data and building a training data set with efficiently annotated data in context of autonomous driving to overcome one or more of the above-mentioned problems of the prior art.

A first aspect of the invention provides a Computer-implemented method for annotating sensor data recorded at multiple timepoints from a surrounding of a vehicle, the method comprising:
- determining an object in the sensor data,
- determining an object area covered by the object at a current timepoint and determining a future vehicle trajectory of the vehicle, and
- annotating the object as relevant if the object area is determined to interfere with the future vehicle trajectory.

The method of the first aspect can annotate objects in the sensor data according to their relevance. By differentiating between relevant and irrelevant objects, a training data set with relevance-oriented annotations can be created. The annotated training data set can then be used e.g. for optimizing supervised training for learning-based methods in the context of Automated Driving (AD). Preferably, the method of the first aspect is carried out after the sensor data have been recorded, e.g. by a fleet of vehicles that are equipped with sensors. The fleet can be driven by human drivers, but the thus acquired sensor data, together with the annotations as provided by the presented method, can be used as an input for training methods of (semi-)automated driving.

The sensor data can comprise camera data of the vehicle that comprise a recording of the surrounding of the vehicle. The sensor data can also comprise any data that is obtained from a sensor of the vehicle to record the surrounding of the vehicle and/or the state and/or motion of the vehicle. The sensor data can comprise a pre-collected database which allows offline computation of the annotation method.

The objects can be static or dynamic objects. In particular, the dynamic objects can include other moving vehicles or other moving traffic participants such as bicyclists, motorcyclists, or pedestrians in the surrounding of the vehicle. Static objects may include non-moving vehicles or other stationary traffic participants.

The term future vehicle trajectory herein refers to the trajectory of the vehicle at timepoints that are later than the current timepoint. The current timepoint may be one of the multiple timepoints. Since the sensor data are preferably pre-recorded data, "timepoint" may refer to the recording timepoint, i.e., the point of time when the recording was created. In other words, embodiments of the method of the first aspect may be considered as going through the recorded sensor data timepoint by timepoint.

By annotating the object that was determined in the sensor data as relevant, objects that are e.g. important for avoiding collisions can be identified. This creates a training data set with data annotated according to relevance.

In a first implementation of the method according to the first aspect, the object area is determined to interfere with the future vehicle trajectory if the object area comes within a predetermined distance of the future vehicle trajectory. By including a predetermined distance, a safety buffer is considered. This can be advantageous in circumstances based on the distance between vehicle being small, a potential collision of the vehicle and the object can be anticipated. Since the annotation of objects as relevant ultimately imply relevance regarding traffic safety. The predetermined distance may be predetermined on various factors extracted from the recorded data, such as ego-vehicle speed, object speed, object distance, object type, environmental factors or other considerations.. For example, a higher speed of the vehicle may correspond to a larger distance. This has the advantage that at higher speeds, when the vehicle should keep a larger distance to other objects, other objects are recognized as relevant more easily.

In a further implementation of the method according to the first aspect, the sensor data comprise camera data. Preferably, the sensor data may be generated using LIDAR, RGBD, stereo cameras, or a fusion of these sensors to record the dynamic objects in the surrounding of the vehicle.

Preferably, the method further comprises a step of determining a trajectory of the vehicle based on collecting vehicle position and/or orientation data over time using a dedicated sensor, in particular a GPS sensor. Optionally, the step of determining the trajectory of the vehicle can be based on collecting sensor data from the surrounding of the vehicle and/or sensor data from sensors integrated into the vehicle, e.g. an IMU device and/or wheel tick sensors. The sensor data are postprocessed to obtain the position and/or orientation of the vehicle over time. This allows an offline computation based on sensor data. The vehicle position may be an absolute position in real world coordinates, e.g. as determined by a GPS sensor.

In a further implementation of the method according to the first aspect, the determining an object area covered by the object comprises performing a mapping from the sensor data to a 3D space, wherein the future vehicle trajectory is stored in the 3D space. The annotated data can be used for the optimization of different ADAS and AD functionalities.

In a further implementation of the method according to the first aspect, the vehicle trajectory comprises the positions of the vehicle at the multiple timepoints based on the sensor data.

In a further implementation of the method according to the first aspect, the annotating the object as relevant comprises annotating the object as future relevant if an object area at a future timepoint after the current timepoint is determined to overlap with the future vehicle trajectory. For example, if another object is approaching the vehicle from behind, it might not be considered as "currently relevant" because its current position will not overlap with the future vehicle trajectory (which is in front of the vehicle, if the vehicle is driving forward). However, it could be "future relevant" because its future position (when it has come closer to or overtaken the vehicle) would overlap with the future vehicle trajectory. Thus, "future relevant" objects may be of particular importance (and they may be recognized e.g. by backwards facing sensors of the vehicle).

By considering a future timepoint, the aspect of foresight that is fundamental for driving maneuvers and has an influence on the vehicle's driving behavior is herein factored in. For example, as indicated above, it could be recognized that vehicle that is approaching quickly from behind is "future relevant", which may even be considered as particularly important. Since the annotation of sensor data according to relevance provides a training data set that separates unimportant objects from important ones, the aspect of foresight is crucial for Automated Driving functionalities.

In particular, the future timepoint considered during the annotation of the future relevant object can be within a predetermined time distance to a current timepoint. For example, the predetermined time distance could be a predetermined time distance that is a constant between 0 and 6 seconds, preferably between 0,5 and 3 seconds.

In a further implementation of the method according to the first aspect, determining the object area covered by the object comprises:
- determining a position and/or orientation of the object from the sensor data; and
- determining the dimensions of the object from sensor data or determining a type of the object from the sensor data and inferring dimensions of the object using predetermined dimensions, wherein the predetermined dimensions are determined based on the determined object type.

In addition to the sensor data as obtained from one or more sensors of the vehicle, additional annotations such as object types (e.g. vehicle types) may be available. This information may help to more accurately determine the object area. A dataset may also comprise detailed information, e.g. specific dimensions and further properties of the objects. Alternatively, the object types may be determined by the method based on the sensor data.

In a further implementation of the method according to the first aspect, the object area is a probabilistic area and/or the future vehicle trajectory is a probabilistic trajectory and the overlap is determined if a probability of an intersection of the object area and the future vehicle trajectory is larger than a predetermined intersection probability threshold. Since various uncertain factors that can influence the driving processes of the vehicle and the object's moving behavior in the surrounding of the vehicle are involved, it is advantageous to consider a probabilistic factor for both the vehicle trajectory and object area to consider future trends that can possibly influence the behavior of the vehicle. The probabilistic trajectory could be influenced e.g. by uncertainty about position due to inaccuracies when acquiring GPS signal at high speed.

In a further implementation of the method according to the first aspect, the annotating the object as relevant comprises annotating a plurality of objects as relevant, and the method further comprises annotating one of the plurality of relevant objects as lead relevant object if the lead relevant object has a smallest distance to the vehicle along the future vehicle trajectory. By further distinguishing the relevant objects, a hierarchy of relevance can be created and the most relevant object out of the relevant objects can be determined as lead relevant. In particular, the lead relevant object can be the lead vehicle, since the lead vehicle is typically driving on the future vehicle trajectory, i.e., it is always relevant.

Another aspect of the present invention relates to a sensor data annotation device configured to carry out the method as described above.

A further aspect of the invention refers to a computer-readable storage medium storing program code, the program code comprising instructions that when executed by a processor carry out the method of the second aspect or one of the implementations of the second aspect.

### BRIEF DESCRIPTION OF DRAWINGS

The accompanying drawings are intended to provide a further understanding of the invention. In this regard, the accompanying drawings illustrate different steps and stages of the method and, in addition to the description, explain concepts of the invention. Many of the advantages mentioned will be apparent with reference to the drawings. The elements shown in the drawings are not necessarily shown to scale with respect to each other.
Fig. 1 is a schematic illustration of a of the positions and object areas of several vehicles, wherein one of the vehicles is identified as lead vehicle.
Fig. 2a is schematic illustration of the positions and object areas of several vehicles at a current timepoint in a scenario where a first vehicle is about to overtake a second vehicle.
Fig. 2b is a schematic illustration of the scenario of Fig. 1a, but considering the locations of the vehicles at a future timepoint.
Fig. 3 shows a scenario similar to what is shown in Figs. 1, 2a, and 2b, but with differently shaped object areas.
Fig. 4 shows a vehicle with sensors sensing surrounding vehicles during acquisition of sensor data.

### DETAILED DESCRIPTION OF EMBODIMENTS

The foregoing descriptions are only implementation manners of the present invention, the scope of the present invention is not limited to this. Any variations or replacements can be easily made through a person skilled in the art. Therefore, the protection scope of the present invention should be subject to the protection scope of the attached claims.

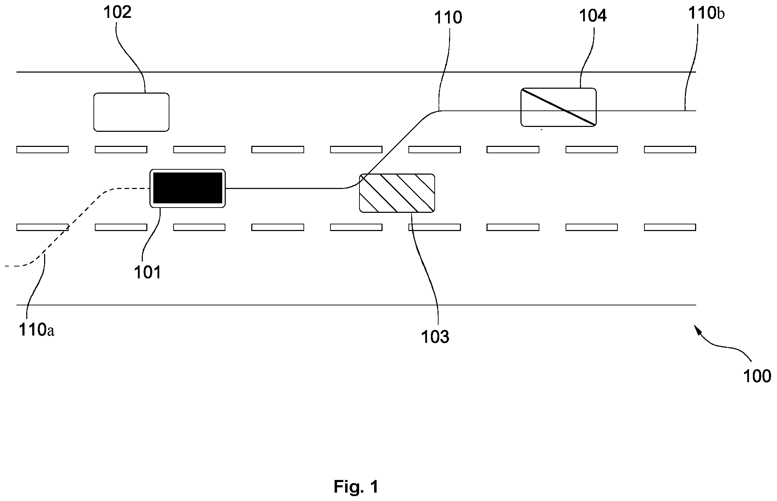

Fig. 1 shows a vehicle 101, in the following also referred to as ego-vehicle, on a street 100 at a current timepoint t. The ego-vehicle is equipped with sensors to record the surrounding, in particular the dynamic objects 102-104, which can be other vehicles or other dynamic traffic participants surrounding the ego-vehicle 101. The ego-vehicle 101 is moving along a trajectory 110, which comprises a past vehicle trajectory 110a and a future vehicle trajectory 110b. The ego-vehicle 101 comprises sensors which collect sensor data of the surrounding of the ego-vehicle 101.

The ego-vehicle is surrounded by second, third, and fourth vehicles 102, 103, 104. In a preferred embodiment that is illustrated in Fig. 1, the object areas of the objects (here: vehicles) correspond to the actual areas that the vehicles occupy, i.e., the vehicles as shown in Fig. 1 correspond to the objects areas of the vehicles. At the first timepoint, the object area of the third vehicle 103 overlaps with the future vehicle trajectory 110b. Therefore, the third vehicle 103 is labeled as a relevant object. The fourth vehicle 104 also overlaps with the future vehicle trajectory 110b, therefore it is also labelled as a relevant object. The object area of the second vehicle 102 is not overlapping with the vehicle trajectory, therefore it is not considered relevant.

Due to the fact that along the future vehicle trajectory 110b the closest relevant object to the ego-vehicle 101 is vehicle 103, it is considered as lead relevant object. From Fig. 1 it can furthermore be anticipated that when the ego-vehicle has progressed further in overtaking the third vehicle 103, its future trajectory will no longer overlap with the third vehicle 103. Then, the fourth vehicle 104 will become the new lead relevant object.

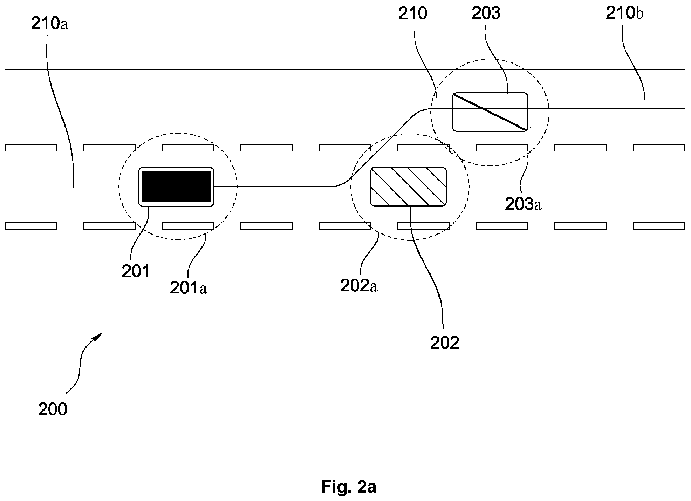

It is understood that in practice the object areas can be defined as larger than the object itself. For example, the scenario shown in Fig. 2a illustrates an embodiment where object areas are defined as circular object areas 201a, 202a, 203a around the centers of objects 201, 202, 203. This can be suitable in particular for detecting objects that are not directly on the future trajectory of the ego-vehicle, but that are driving e.g. on neighboring lanes and that may therefore be of importance.

Fig. 2a shows a scenario where an ego-vehicle 201 is driving on a middle lane of a street 200. (Note that the lane markings are not required for the working of the method). The ego-vehicle 201 is surrounded by second and third vehicles 202, 203 that are driving on the same and a neighboring lane. The scenario shown in Fig. 2a corresponds to a first timepoint, which corresponds to the beginning of an overtaking maneuver by the ego-vehicle 201. The ego-vehicle 201 is driving on the middle lane and its driver is about to overtake the second vehicle 202 which is driving in front of the ego vehicle 201 on the middle lane. The trajectory 210 of the ego-vehicle 201 can be separated into a past vehicle trajectory 210a, which is the trajectory that the vehicle has passed through until the current timepoint, and a future vehicle trajectory 210b, which is the part of the trajectory that the vehicle will pass through after the current timepoint.

The future trajectory 210b of the ego-vehicle reflects the process of changing to the left lane and overtaking the second vehicle.

On the left lane, there is a third vehicle 203. At the current timepoint the future trajectory 210b is overlapping with the object area of the second vehicle 202 and the object area of the third vehicle 203.. Since the second vehicle 202 is closer than the third vehicle 203, the second vehicle is the lead relevant vehicle.

Let us denote the timepoint depicted in Fig. 2a as time T. Note, that in Fig. 2a, vehicles 202 and 203 appear as relevant objects, as their object areas intersect with the future vehicle trajectory.

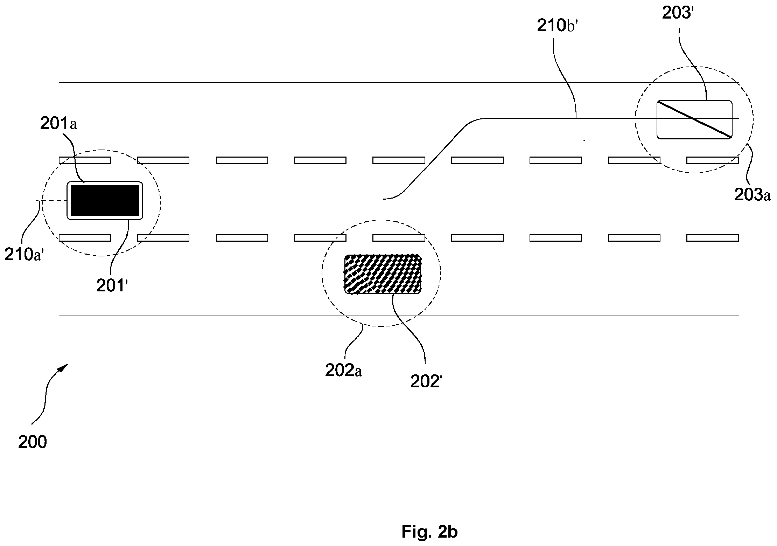

Fig. 2b shows the same street 200 and the same vehicles as Fig. 2a, but at an earlier timepoint. Let us denote this earlier timepoint as T - tau, where tau is a predetermined time distance before the timepoint, preferably between 0 and 3 seconds. Considering that in Fig 2b an earlier timepoint is being depicted, the ego-vehicle 201 is appearing in a position 201' on its past trajectory.

At the earlier timepoint T - tau represented in Fig. 2b, the object area of the second vehicle 202' does not intersect with the future trajectory 210b', because at this timepoint the second vehicle has not yet moved to the middle line. Thus at T - tau the second vehicle is not (yet) a relevant object. However, it is marked as a future relevant object, as it is going to be relevant object in an upcoming timepoint T depicted in Fig. 2a.

At the timepoint T - tau represented in Fig. 2b, the object area of the third vehicle 203' intersects with the future trajectory given in T - tau, thus it is marked a relevant object. In addition to that, it is also marked as a future relevant object, as it is going to be relevant object in an upcoming timepoint T depicted in Fig. 2a. In other words, the third vehicle 203' is a relevant object, a future relevant object and also a lead relevant object.

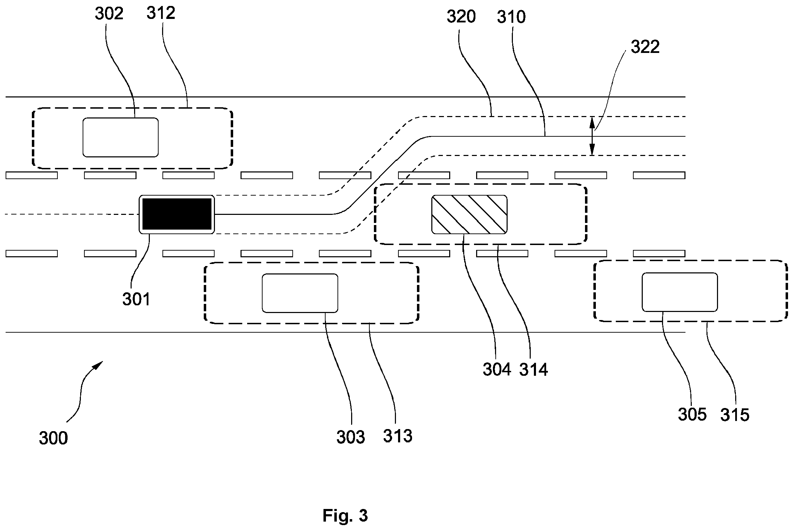

In the above embodiments, the object area corresponds to the actual area covered by the objects. However, this is not necessary. In other embodiments, the object area can be e.g. a circular area around the center of the vehicle. In yet other embodiments, the shape of the object area is not a circular shape and can of be any geometric shape. Fig. 3 shows an implementation where the object area is of a rectangular shape located around the center of the objects. The rectangular shape can vary in size based on the object types and dimensions. The shape and size of the object area can be based on predetermined safety parameters such as minimum headway. A circular shape can also be suitable for pedestrians or bicyclists that need a broad buffer area for safety reasons. Fig. 3 also illustrates that the vehicles 302-305 can have object areas 312-315 around them that have rectangular shapes. These shapes can be shifted forward from the center of the object. This has the advantage that the object area can reflect not only the actual area covered by the objects, but also the area that falls within the space that is considered "dangerous". For example, it would be considered dangerous if the ego vehicle comes within 5 meters in front of another vehicle or within 1 meter on the side of another vehicle. Similarly, the vehicle trajectory 310 can comprise a safety margin 320 with width 322 and the fourth vehicle 304 can be considered to interfere with the future vehicle trajectory 310 because the safety margin 320 overlaps with the object area 314 of the fourth vehicle 304.

An "other vehicle" can be annotated as relevant if the area of the vehicle, which is a predetermined dimension based on the object type, e.g. a vehicle type, is determined to interfere with the future vehicle trajectory. Furthermore, annotating the object as relevant can comprises annotating the object as future relevant if an object area at a future timepoint after the current timepoint is determined to overlap with the future vehicle trajectory, wherein preferably the future vehicle trajectory is defined as comprising the locations that correspond to timepoints that are in the future compared to the current timepoint.

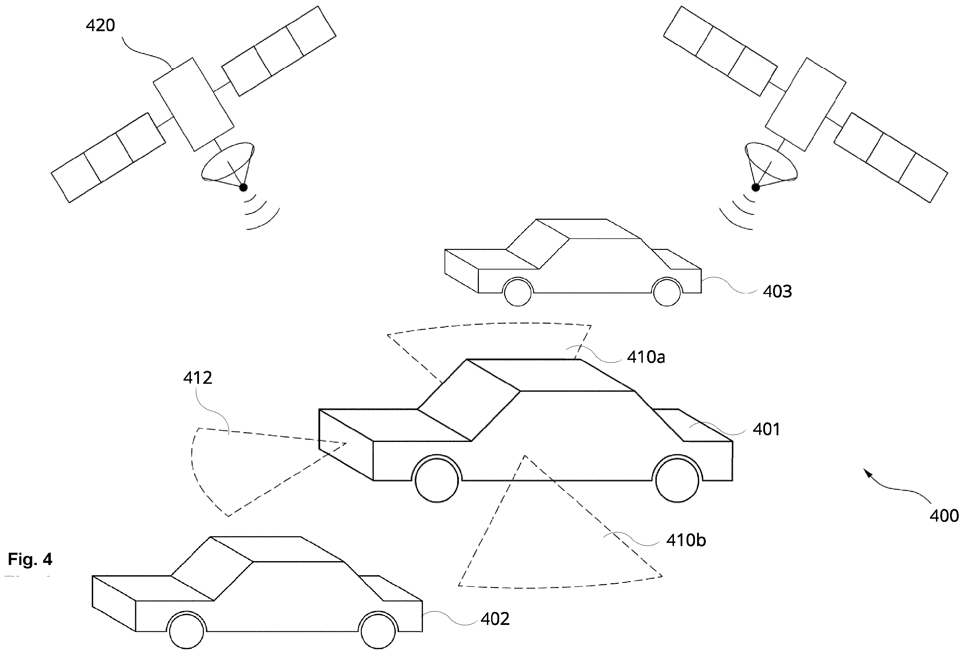

Fig. 4 shows the different interrelations between an ego-vehicle 401 and outside entities. The vehicle 401 comprises sensors that acquire recordings from areas 410a, 410b on the left and right side of the vehicle and from an area 412 in front of the vehicle. There maybe additional sensors, not shown in Fig. 4, that are backward-looking.

The vehicle trajectory can be either obtained directly, by receiving positioning and orientation data from GPS signals 420 or indirectly, by postprocessing sensor data from the surrounding of the ego-vehicle 401 such that the position and/or orientation of the vehicle over time can be calculated from the sensor data. As visualized in Fig. 4, the surrounding of the ego-vehicle comprises objects 402, 403 that, after the ego-vehicle has finished the acquisition of the sensor data and the vehicle trajectory can then (preferably offline) can be annotated as relevant, as future relevant and/or as lead vehicle.

The method can be performed offline without any connections to any networks, i.e., it can completely rely on previously recorded data.

Known methods usually process instantaneous (per-frame) data, or data gathered in the near past, (most recent few samples, while keeping the time-coupling (synchronicity) between the data recorded from the surrounding dynamic objects and about the ego-vehicle's own movement. In this way, these methods are capable of reasoning about the surrounding dynamic objects using historical data. Also, it is usual to use information from the static world (such as detected lane markings, road edge etc.) to separately identify dynamic objects with higher importance e.g. by focusing on objects in the ego-lane.

The presented method can add semantic labels, in particular: relevant, lead relevant, or future relevant, to the elementary annotation. These semantic labels can which reflect the object's relevancy with respect to the given traffic situation.

The method is based on the decoupling of the time-synchronized data - measurements of the surrounding dynamic objects and the actual motion of the recording ego-vehicle. Consider the scene built from the elementary annotations of the surrounding dynamic objects at a given time sample and the integrated motion of the ego-vehicle giving its overall path over the complete recording. Exploiting the basic properties of the ego-motion data, any past or future section of this path can be projected into the selected scene. Creating this merged scene gives the opportunity to reason about past and future correspondences between the dynamic actors on the given scene and the selected path sections, independently from their original recording time.

In the presented method, we take this merged scene to determine the relevancy of dynamic objects. Traffic-aware semantic annotations can be added to the dynamic objects which are based on future path data. Note, that this method only requires the elementary annotation of dynamic objects, but not the annotation of any static object in the sur-rounding, such as lane markings, road edge etc.

In a preferred embodiment extracting a lead object property from the continuous time series of elementary annotations can be implemented as follows:
(1) By overlapping the future trajectory of the ego-vehicle on the object's current annotations, it can be determined which objects will intersect with the future trajectory of the ego-vehicle. From these objects, the nearest object to the future vehicle trajectory can be considered as lead object - and this information can be marked in the annotation.
(2) Consider the object marked as lead object at a given timepoint t₀. If this specific object exists in the elementary annotations at t₀₋ₓ in the past, let us mark it as a future lead object in t₀₋ₓ with a prediction horizon of x second. In this way, objects can be annotated as future lead object adding temporal prediction capability.

Besides the lead object property, various other aspects of relevancy can be annotated in a similar way, such as a dense highway traffic situation approaching an exit with multiple objects (vehicles) in a queue. In case of merging into such column of vehicles one can mark the vehicle during the annotation, behind which there is a safe gap to merge into. Hence, one can obtain semantic annotations supporting merge maneuvers.

In a multi-lane traffic situation, one can mark those objects/vehicles which should be considered when planning lane change maneuvers or providing lane change proposals for the driver.

Once we can identify relevant objects from the elementary annotations, the method can be extended to specifically focus on the detection and state estimation of the relevant objects. By training a learning-based method on the semantically annotated data an attention-like solution can emerge, where the method can identify which parts of its input are more important: relevant objects (or as in the example above: lead objects) might have higher importance than others. Having such a focused method in hand can have multiple benefits, such as: the computational need can be reduced (e.g., by eliminating irrelevant object's detection and tracking), output is clearer and structured, measuring the method's precision can be more exact etc.

## Claims

1. A Computer-implemented method for annotating sensor data recorded at multiple timepoints from a surrounding of a vehicle (101, 201, 301, 401), the method comprising:
- determining an object (102-104, 202, 203, 302-305, 403) in the sensor data;
- determining an object area (201a, 202a, 203a, 312-315) covered by the object (102-104, 202, 203, 302-305, 403) at a current timepoint and determining a future vehicle trajectory (110b, 210b) of the vehicle (101, 201, 301, 401); and
- annotating the object (102-104, 202, 203, 302-305, 403) as relevant if the object area (201a, 202a, 203a, 312-315) is determined to interfere with the future vehicle trajectory (110b, 210b).

2. The method of claim 1, wherein the object area (201a, 202a, 203a, 312-315) is determined to interfere with the future vehicle trajectory (110b, 210b) if the object area (201a, 202a, 203a, 312-315) comes within a predetermined distance of the future vehicle trajectory (110b, 210b).

3. The method of one of the previous claims, wherein the sensor data comprise camera data, LIDAR and/or RADAR.

4. The method of one of the previous claims, further comprising a step of determining a trajectory (110, 210) of the vehicle (101, 201, 301, 401) based on:
- collecting vehicle (101, 201, 301, 401) position and/or orientation data overtime using a dedicated position sensor, in particular a GPS sensor; or
- collecting sensor data from the surrounding of the vehicle (101, 201, 301, 401) and postprocessing the sensor data to obtain the position and/or orientation of the vehicle (101, 201, 301, 401) over time.

5. The method of one of the previous claims, wherein the determining an object area (201a, 202a, 203a, 312-315) covered by the object (102-104, 202, 203, 302-305, 403) comprises performing a mapping from the sensor data to a 3D space, and wherein the future vehicle trajectory (110b, 210b) is stored in the 3D space.

6. The method of one of the previous claims, wherein the vehicle trajectory comprises the positions of the vehicle (101, 201, 301, 401) at the multiple timepoints based on the sensor data.

7. The method of one of the previous claims, wherein the annotating the object (102-104, 202, 203, 302-305, 403) as relevant comprises annotating the object (102-104, 202, 203, 302-305, 403) as future relevant if an object area (201a, 202a, 203a, 312-315) at a future timepoint after the current timepoint is determined to overlap with the future vehicle trajectory (110b, 210b).

8. The method of claim 7, wherein the future timepoint is within a predetermined time distance to a current timepoint.

9. The method of one of the previous claims, wherein determining the object area (201a, 202a, 203a, 312-315) covered by the object (102-104, 202, 203, 302-305, 403) comprises:
- determining a position and/or orientation of the object (102-104, 202, 203, 302-305, 403) from the sensor data; and
- determining the dimensions of the object (102-104, 202, 203, 302-305, 403) from sensor data, or determining a type of the object (102-104, 202, 203, 302-305, 403) from the sensor data and inferring dimensions of the object (102-104, 202, 203, 302-305, 403) using predetermined dimensions, wherein the predetermined dimensions are determined based on the determined object (102-104, 202, 203, 302-305, 403) type.

10. The method of one of the previous claims, wherein the object area (201a, 202a, 203a, 312-315) is a probabilistic area and/or the vehicle trajectory is a probabilistic trajectory and the overlap is determined if a probability of an intersection of the object area (201a, 202a, 203a, 312-315) and the vehicle trajectory is larger than a predetermined intersection probability threshold.

11. The method of one of the previous claims, wherein the annotating the object (102-104, 202, 203, 302-305, 403) as relevant comprises annotating a plurality of objects (102-104, 202, 203, 302-305, 403) as relevant, and the method further comprises annotating one of the plurality of relevant objects as lead relevant object (103, 202, 304) if the lead relevant object (103, 202, 304) has a smallest distance to the vehicle (101, 201, 301, 401) along the future vehicle trajectory (110b, 210b).

12. The method of one of the previous claims, wherein the object area (201a, 202a, 203a, 312-315) is determined as a predetermined area around a center of the object (102-104, 202, 203, 302-305, 403).

13. The method of claim 12, wherein a size of the object area (201a, 202a, 203a, 312-315) depends on speed of the vehicle (101, 201, 301, 401).

14. A sensor data annotation device, wherein the device is configured to carry out the method of one of the previous claims.

15. A computer-readable storage medium comprising instructions which, when executed by a computer, cause the computer to carry out the method of one of claims 1 to 13.
